# EUROPEAN PATENT APPLICATION

(11) **EP 3 480 570 A1**
(43) Date of publication of application: **08.05.2019**
(21) Application number: 18203587.3
(22) Date of filing: 31.10.2018
(51) Int. Cl.: G01J 1/04, G01J 1/42

(54) **PYRANOMETER AND PHOTOMETRIC DEVICE**

(30) Priority: 01.11.2017 JP 2017211806; 30.01.2018 JP 2018013612
(71) Applicant: Eko Instruments Co., Ltd., Tokyo 151-0072 (JP)
(72) Inventor: HASEGAWA, Toshikazu, Tokyo, 151-0072 (JP); AKIYAMA, Akihito, Tokyo, 151-0072 (JP); YANO, Ayako, Tokyo, 151-0072 (JP)
(74) Representative: Schön, Christoph

(57) **Abstract**

A pyranometer comprises: a light sensor; a first lens arranged to face a light-receiving surface of the light sensor; and a light-shielding ring arranged between the light sensor and the first lens, the light-shielding ring having a light-transmissive region allowing transmission of light at some angles of incidence in the light passing through the first lens.

## Description

### [Technical Field]

The present invention relates to a pyranometer and photometric device for measuring the intensity and amount of solar radiation.

### [Background Art]

For many years, solar radiation has been measured using a radiation sensor known as an all-weather pyranometer (hereinafter "pyranometer") as defined and categorized by the ISO 9060 standard. A widely used type of pyranometer uses a flat-plate thermal sensor (thermopile) having a black absorbent material surface for receiving radiation within the range of the solar spectrum (primary wavelengths: 300 nm to 3000 nm).

Many products in recent years use a new thermal sensor including a thin-film thermopile rather than a flat-plate thermal sensor (thermopile). Thin-film thermopiles have the advantages of faster response speeds than conventional thermopiles and an ability to adapt in a short period of time to changes in solar irradiance. However, in general, the light-receiving unit of a thin-film thermopile is housed inside a package, and incident light is received via a window provided in the package. As a result, light with a large angle of incidence is not incident on the light-receiving unit from the window. In other words, a sensor housed in a package has an acceptance angle (angle at which incident light can be received).

Theoretically, the light-receiving region becomes smaller in proportion to COSθ (where θ is the angle of incidence with respect to the light-receiving unit). For this reason, light having an angle of incidence of 90° cannot be received and the irradiance (amount of light) is 0. In the case of a light-receiving element with no acceptance angle, such as a conventional flat-plate thermal sensor, a value obtained by dividing irradiance dependent on the angle of incidence θ by COSθ is constant regardless of the angle of incidence. However, there is a problem with light-receiving elements having an acceptance angle, such as sensors housed in a package, in that an error (COS error) occurs between the output value of the sensor (irradiance) and the theoretical value for the irradiance dependent on the angle of incidence θ.

For example, examples are described in Patent Document 1 and Patent Document 2 in which an attempt is made to reduce the COS error using a single lens arranged between a light source and a light-receiving surface of a sensor.

### [Prior Art Literature]

### [Patent Literature]

[Patent Document 1]
   JP 2621430 B2
[Patent Document 2]
   JP 2668948 B2

### [Summary of the Invention]

### [Problem to be Solved by the Invention]

However, as described in Patent Document 1 and Patent Document 2, it is difficult to sufficiently reduce the COS error with a single lens in a measuring device using a sensor with a narrow acceptance angle.

In view of the problem described above, it is an object of the present invention to provide a pyranometer able to sufficiently reduce the COS error while using a sensor having an acceptance angle.

### [Means for Solving the Problem]

One aspect of the present invention is a pyranometer comprising:
a light sensor;
a first lens arranged to face a light-receiving surface of the light sensor; and
a light-shielding ring arranged between the light sensor and the first lens, the light-shielding ring having a light-transmissive region allowing transmission of light at some angles of incidence in the light passing through the first lens.

Preferably, a plurality of light-shielding rings is provided between the light sensor and the first lens.

Preferably, the light-transmissive region in the plurality of light-shielding rings becomes smaller closer to the sensor.

A second lens may be provided between the light sensor and the first lens.

The light-shielding ring may be provided between the first lens and the second lens.

A diffusing medium may be provided between the light sensor and the first lens.

A plurality of lenses may be provided facing a light-receiving surface of the light sensor, and the diffusing medium may be provided between the light sensor and the lens closest to the light sensor.

Another aspect of the present invention is a photometric device comprising:
a light sensor;
a first lens arranged to face a light-receiving surface of the light sensor; and
a light-shielding ring arranged between the light sensor and the first lens, the light-shielding ring having a light-transmissive region allowing transmission of light at some angles of incidence in the light passing through the first lens.

### [Effect of the Invention]

A pyranometer of the present invention is able to sufficiently reduce the COS error while using a sensor having an acceptance angle.

### [Brief Description of the Drawings]

[FIG. 1]

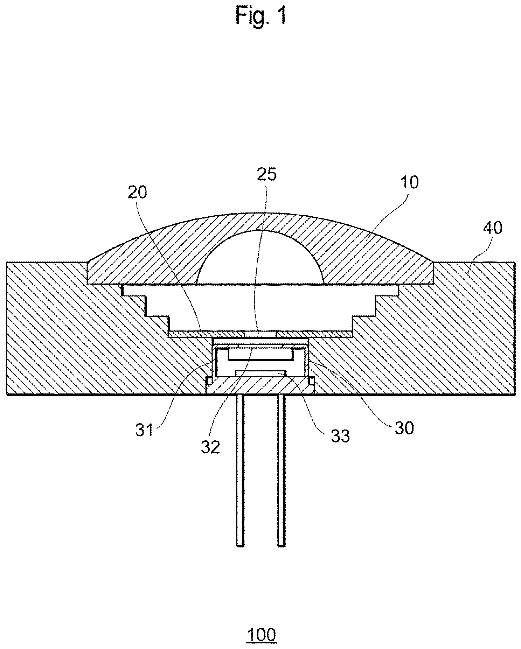

   FIG. 1 is a side cross-sectional view showing the schematic configuration of the pyranometer 100 in the first embodiment of the present invention.
[FIG. 2]

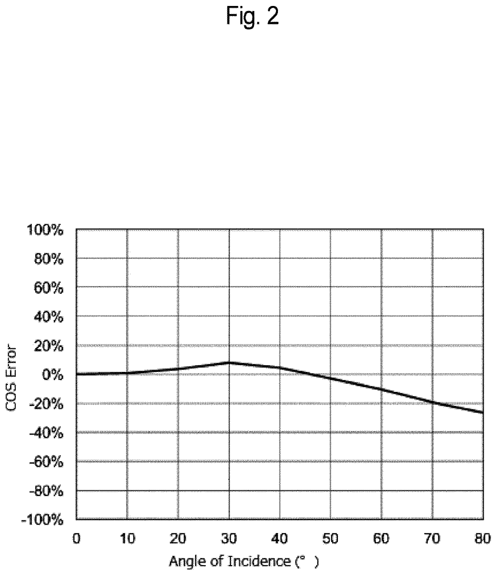

   FIG. 2 is a graph showing the relationship between the angle of incidence and the COS error in the pyranometer 100 in the first embodiment of the present invention.
[FIG. 3]

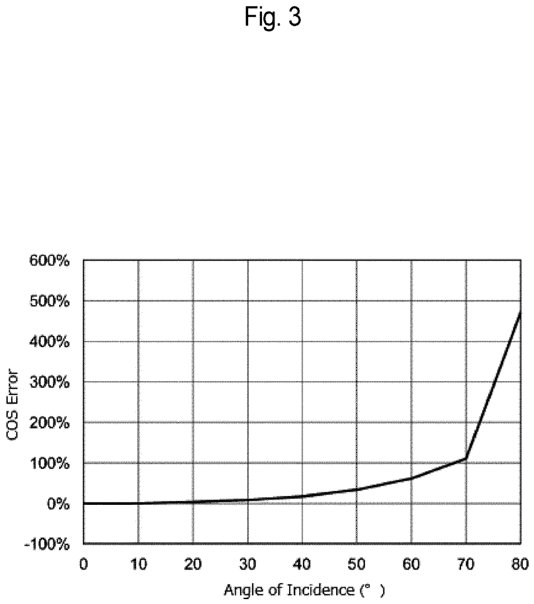

   FIG. 3 is a graph showing the relationship between the angle of incidence and the COS error as measured using a pyranometer in a comparative example.
[FIG. 4]

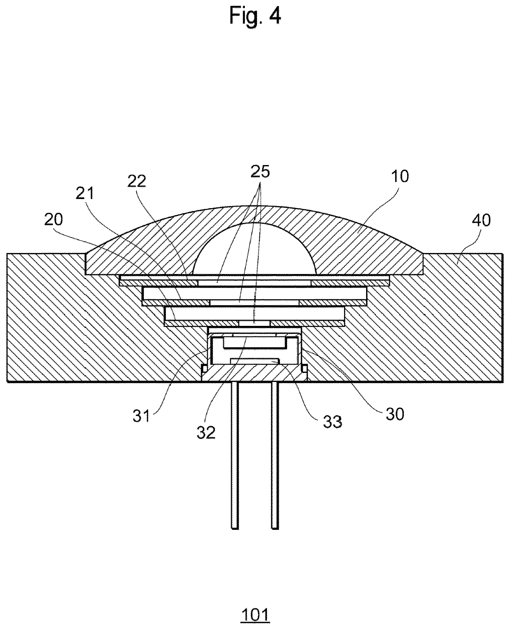

   FIG. 4 is a side cross-sectional view showing the schematic configuration of the pyranometer 101 in the second embodiment of the present invention.
[FIG. 5]

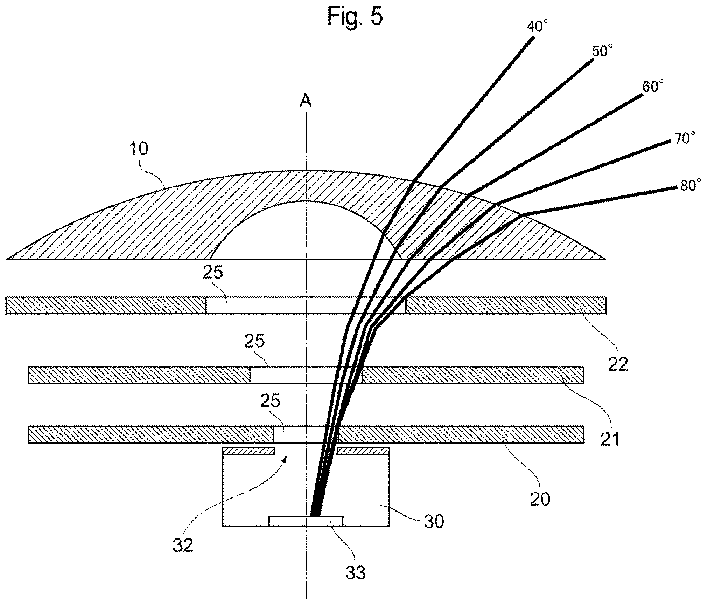

   FIG. 5 is a diagram schematically illustrating light incident on the pyranometer 101 at various angles of incidence.
[FIG. 6]

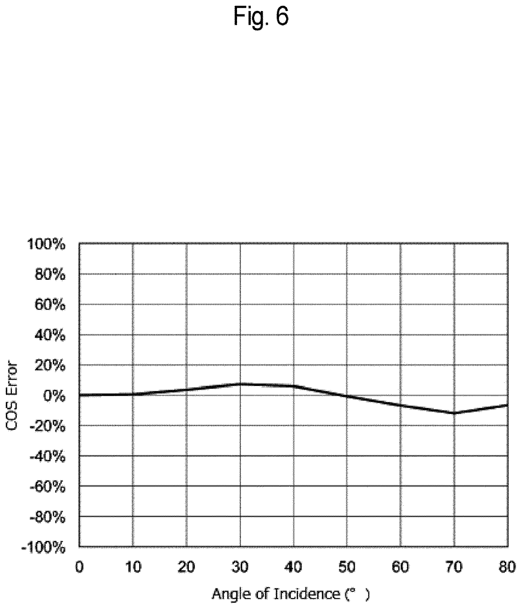

   FIG. 6 is a graph showing the relationship between the angle of incidence and the COS error in the pyranometer 101 in the second embodiment of the present invention.
[FIG. 7]

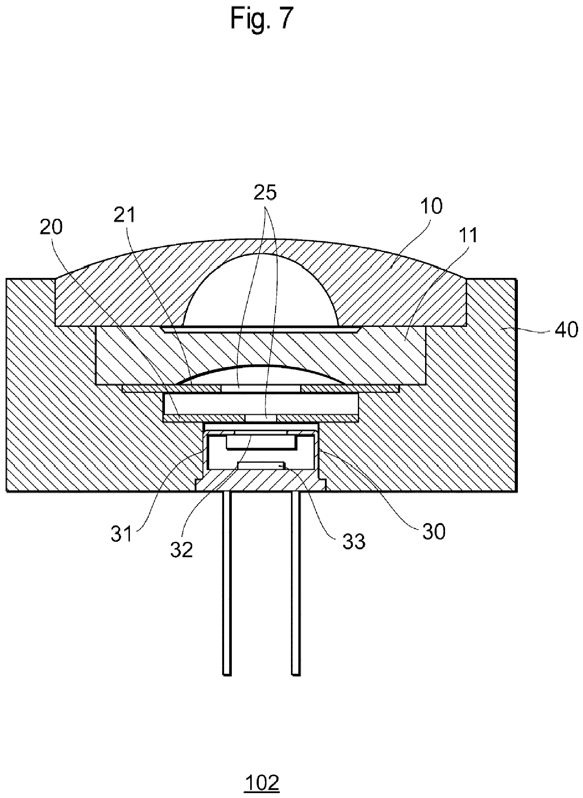

   FIG. 7 is a side cross-sectional view showing the schematic configuration of the pyranometer 102 in the third embodiment of the present invention.
[FIG. 8]

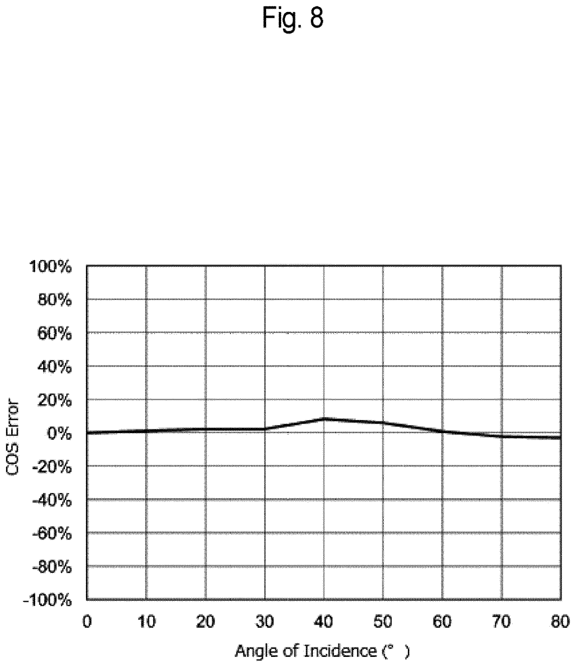

   FIG. 8 is a graph showing the relationship between the angle of incidence and the COS error in the pyranometer 102 in the third embodiment of the present invention.
[FIG. 9]

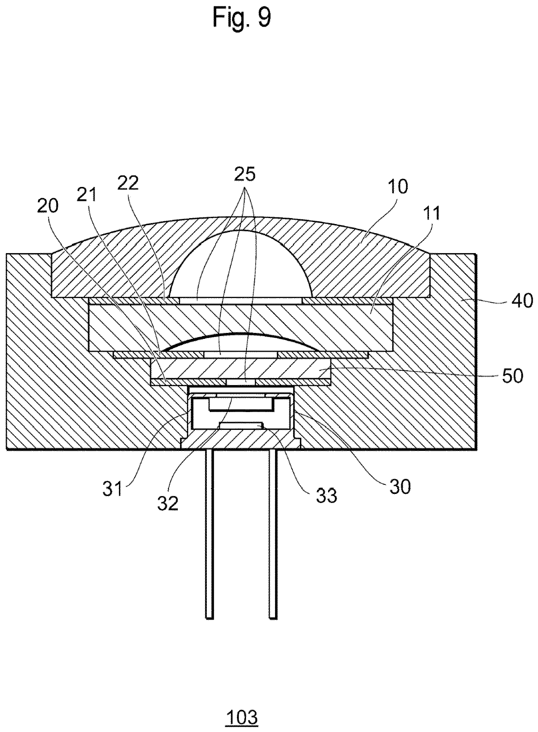

   FIG. 9 is a side cross-sectional view showing the schematic configuration of the pyranometer 103 in the fourth embodiment of the present invention.
[FIG. 10]

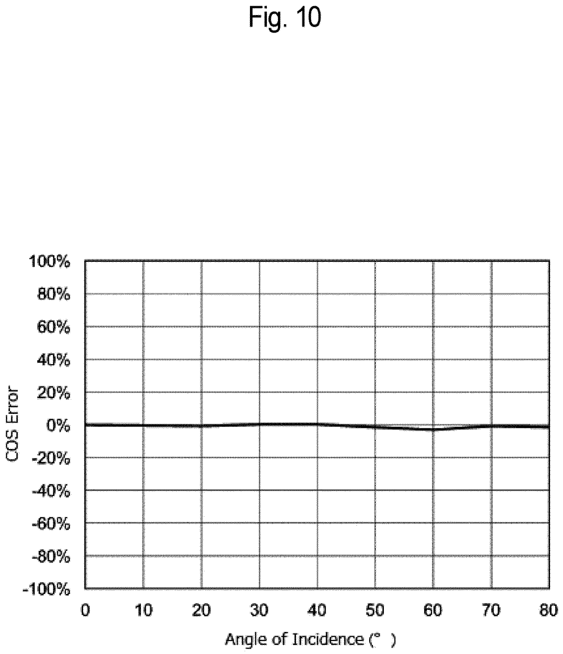

   FIG. 10 is a graph showing the relationship between the angle of incidence and the COS error in the pyranometer 103 in the fourth embodiment of the present invention.

### [Embodiment of the Invention]

The following is a description of embodiments of the present invention. In the drawings, identical or similar portions are denoted by the same reference numbers. The drawings are schematic drawings, and specific details such as dimensions should be determined by referring to the following description. Also, the drawings may include portions whose dimensional relationships and ratios differ from those in other drawings.

### Embodiment 1

FIG. 1 is a side cross-sectional view showing the schematic configuration of the pyranometer 100 in the present embodiment. This pyranometer 100 is an all-weather pyranometer as defined and categorized by the ISO 9060 standard. Spectroradiometers may also be included under pyranometers. As shown in FIG. 1, the pyranometer 100 is provided with a condenser lens (first lens) 10, a light-shielding ring 20, a sensor 30, and a case 40.

A condenser lens 10 is a lens for condensing incident light and guiding the light to a sensor 30. This can be a concave meniscus lens. The light-shielding ring 20 is provided between the condenser lens 10 and the sensor 30.

The light-shielding ring 20 is a member having a light-transmissive region 25 in a central portion. The light-shielding ring 20 has one or more components (parts). It preferably has a strength at or above a predetermined level and a surface treated to suppress the reflection of light. For example, it can be made of an aluminum material whose surface has been treated with black alumite. The light-shielding ring 20 may be integrally formed with the case 40. The light-shielding ring 20 may also be a light-shielding film formed using a film-like material. The light-shielding ring 20 may also be formed by applying a light-shielding material to, for example, the surface of the condenser lens 10. The light-transmissive region 25 may be a through-hole or may be formed using a transparent material. The light-transmissive region 25 may be circular, polygonal, oval-shaped, star-shaped, or gear-shaped. The center of the light-transmissive region 25 of the light-shielding ring 20 is on the optical axis of the condenser lens 10. When light passing through the condenser lens 10 is incident on the light-shielding ring 20, light at some angles of incidence (in particular, light at smaller angles of incidence) is able to pass through the light-transmissive region 25. However, light at other angles of incidence (in particular, light at larger angles of incidence) is not able to pass through the light-transmissive region 25 and is instead blocked by the member of the light-shielding ring 20. Light blocked by the light-shielding member 20 does not reach the sensor 30.

The sensor 30 includes a metal package 31, a light-transmissive window 32, and a light-receiving unit 33. The sensor 30 can be a heat (thermal) sensor such as a thermopile, thermistor, Peltier device, or platinum resistor. When the sensor 30 is a thermopile, light (light energy) incident on the light-receiving unit 33 is converted to heat (thermal energy), and electrical signals corresponding to the heat are outputted. By using a thin-film thermopile, the response time of the sensor 30 to light in the pyranometer can be shortened. Stable thin-film thermopiles can be produced more easily by using a microfabrication technology for microelectromechanical systems (MEMS) on a silicon base. A sensor 30 consisting of a thermopile with a silicon base has nearly uniform spectral sensitivity in the solar spectrum (300 to 3,000 nm). The mechanical strength of the sensor 30 is higher when the light-receiving unit 33 is housed in a package 31. When sealed in a package 31, the effects of a severe outside environment are reduced and long-term stability is increased. A sensor with long-term stability is also obtained when the package 31 is filled with a predetermined gas (an inert gas such as nitrogen or a noble gas (He, Ar, Xe, Ne, etc.)).

An opening is formed in the package 31 based, for example, on the peripheral edges (outer diameter) of the light-receiving unit 33 and the opening is sealed with a light-transmissive window 32 so that the light-receiving unit 33 can receive light. The light-transmissive window 32 has uniformly high transmittance, that is, a transmittance of at least 50%, in the solar spectrum (300 to 3,000 nm). With these transmittance characteristics, a pyranometer can be obtained which has broad spectrum characteristics while remaining sealed. Because the light-receiving unit 33 is sealed inside a package 31 and receives incident light from a light-transmissive window 32, light with a large angle of incidence can be received from the window. In other words, the sensor 30 has an acceptance angle.

The case 40 fixes the condenser lens 10, the light-shielding ring 20, and the sensor 30. The case 40 has one or more components (parts) and is preferably made of a material having a strength at or above a predetermined level and thermal conductivity at or above a predetermined level. For example, it can be made of a metal material such as aluminum.

FIG. 2 is a graph showing the relationship between the angle of incidence and the COS error in the pyranometer 100. FIG. 3 is a graph showing the relationship between the angle of incidence and the COS error as measured using a pyranometer that does not have a light-shielding ring 20 (comparative example). In FIG. 2 and FIG. 3, the horizontal axis denotes the angle of incidence (°) and the vertical axis denotes the COS error (%). It is clear from FIG. 3 that the COS error at particularly large angles of incidence is significant when a light-shielding ring 20 is not provided. It is also clear from FIG. 2 that the COS error at larger angles of incidence is improved significantly and there is an overall improvement in the COS error when a light-shielding ring 20 is provided to block light mainly at large angles of incidence.

In the present embodiment, as explained above, by providing a light-shielding ring 20 with a light-transmissive region 25 for allowing transmission of light at some angles of incidence between a condenser lens 10 and a sensor 30, light at the angles of incidence not allowed through the light-transmissive region 25 is not incident on the sensor and the COS error of the pyranometer 100 can be improved.

### Embodiment 2

FIG. 4 is a side cross-sectional view showing the schematic configuration of the pyranometer 101 in the present embodiment. Configurational elements identical or similar to those in FIG. 1 are denoted by the same reference numbers. As shown in FIG. 4, the pyranometer 101 is provided with light-shielding rings 21, 22 in addition to light-shielding ring 20. As in the case of light-shielding ring 20, light-shielding rings 21, 22 each have a light-transmissive region 25 in a central portion, and the center of the light-transmissive region 25 is on the optical axis of the condenser lens 10.

In the three light-shielding rings 20-22, the area of the light-transmissive region 25 becomes smaller closer to the sensor 30, that is, in the order of light-shielding ring 22, light-shielding ring 21, and light-shielding ring 20.

FIG. 5 is a diagram schematically illustrating light incident on the pyranometer 101 at various angles of incidence (40° to 80°). As shown in FIG. 5, the light at larger angles of incidence (for example, 80° or greater) at the position farthest from the sensor 30 (the position of light-shielding ring 22) passes through a position away from the optical axis A of the condenser lens 10 and is blocked by the light-shielding ring 22. Closer to the sensor 30, the light at each angle of incidence is condensed towards the sensor 30 due to the effect of the condenser lens 10, and light having smaller angles of incidence is blocked along with light having large angles of incidence by the light-shielding ring close to the sensor 30. In other words, the light-shielding rings farther from the sensor 30 mainly block light having a large angle of incidence, and the light-shielding rings closer to the sensor 30 block light having a smaller angle of incidence in addition to light having a large angle of incidence.

FIG. 6 is a graph showing the relationship between the angle of incidence and the COS error in the pyranometer 101 in the present embodiment. In FIG. 6, the horizontal axis denotes the angle of incidence (°) and the vertical axis denotes the COS error (%). It is clear from the graph in FIG. 6 that the COS error is improved significantly compared to the pyranometer in the comparative example shown in FIG. 3 which is not provided with a light-shielding ring. More specifically, the COS error is improved at large angles of incidence (for example, 80°) and the COS error is improved at smaller angles of incidence (for example, 70°) as well.

In the present embodiment, as described above, by providing a plurality of light-shielding rings 20-22 between the condenser lens 10 and the sensor 30, light at an angle of incidence that cannot pass through the light-transmissive regions 25 of the light-shielding rings 20-22 does not reach the sensor 30 and the COS error of the pyranometer 101 can be improved. By reducing the area of the light-transmissive regions 25 in the light-shielding rings arranged closer to the sensor 30, light incident on the sensor 30 can be effectively controlled and the COS error-reducing effect can be increased.

### Embodiment 3

FIG. 7 is a side cross-sectional view showing the schematic configuration of the pyranometer 102 in the present embodiment. Configurational elements identical or similar to those in FIG. 1 or FIG. 4 are denoted by the same reference numbers. As shown in FIG. 7, the pyranometer 102 is provided with two light-shielding rings 20, 21. Also, the pyranometer 102 is provided with a condenser lens 11 between condenser lens 10 and light-shielding ring 21.

FIG. 8 is a graph showing the relationship between the angle of incidence and the COS error in the pyranometer 102. In FIG. 8, the horizontal axis denotes the angle of incidence (°) and the vertical axis denotes the COS error (%). The COS error is improved significantly in this pyranometer 102 compared to the pyranometer in the comparative example shown in FIG. 3.

In the present embodiment, as described above, by providing a plurality of light-shielding rings 20-21 between the condenser lens 10 and the sensor 30 and also providing a plurality of condenser lenses, the COS error of the pyranometer 102 can be reduced significantly.

### Embodiment 4

FIG. 9 is a side cross-sectional view showing the schematic configuration of the pyranometer 103 in the present embodiment. Configurational elements identical or similar to those in FIG. 1, FIG. 4, and FIG. 7 are denoted by the same reference numbers. As shown in FIG. 9, the pyranometer 103 is provided with two condenser lenses 10, 11, and is provided with a diffusing plate (diffusing medium) 50 between the condenser lens 11 and the sensor 30. Also, light-shielding ring 22, light-shielding ring 21, and light-shielding ring 20 are provided, respectively, between condenser lens 10 and condenser lens 11, between condenser lens 11 and the diffusing plate 50, and between the diffusing plate 50 and the sensor 30. In addition, the area of the light-transmissive region 25 becomes smaller in the order of light-shielding ring 22, light-shielding ring 21, and light-shielding ring 20.

A diffusing plate 50 may be configured to diffuse incident light by frosting, applying a diffusing material to, or embedding bubbles or particles in an optical medium (such as a flat glass plate). Instead of a diffusing plate 50 (diffusing medium), the side of a condenser lens closer to the sensor may be frosted or coated with a diffusing material, etc.

FIG. 10 is a graph showing the relationship between the angle of incidence and the COS error in the pyranometer 103. In FIG. 10, the horizontal axis denotes the angle of incidence (°) and the vertical axis denotes the COS error (%). The COS error is improved significantly in this pyranometer 103 compared to the pyranometer in the comparative example shown in FIG. 3.

In the present embodiment, as described above, by providing a diffusing plate 50 between the condenser lens 10 and the sensor 30, the COS error of the pyranometer 103 can be reduced significantly.

The present invention is not limited to the embodiments described above. Many different variations are possible. Also, the present invention can be applied to a photometric device requiring good angle of incidence characteristics other than a pyranometer, such as a spectroradiometer. In the embodiments described above, the sensor 30 was a sensor sealed in a metal package with a light-transmissive window. However, the sensor is not limited to this example. A good effect can be realized with any sensor having an acceptance angle or equivalent (for example, an optical fiber). Also, embodiments described above had one or more condenser lenses, but three or more condenser lenses may also be used.

The examples and application examples described in the embodiments of the present invention can be used in combination with each other or with additional modifications or improvements where appropriate depending on the application, and the present invention is not limited to the embodiments described above. It should be clear from the description of the claims that additional combinations, modifications, and improvements are included in the technical scope of the present invention.

### [Key to the Drawings]

10, 11 ... Condenser lens
20, 21, 22 ... Light-shielding ring
25 ... Light-transmissive region
30 ... Sensor
31 ... Package
32 ... Light-transmissive window
33 ... Light-receiving unit
40 ... Case
50 ... Diffusing plate
100, 101, 102, 103 ... Pyranometer

## Claims

1. A pyranometer comprising:
a light sensor;
a first lens arranged to face a light-receiving surface of the light sensor; and
a light-shielding ring arranged between the light sensor and the first lens, the light-shielding ring having a light-transmissive region allowing transmission of light at some angles of incidence in the light passing through the first lens.

2. A pyranometer according to claim 1, wherein a plurality of light-shielding rings is provided between the light sensor and the first lens.

3. A pyranometer according to claim 2, wherein the light-transmissive region in the plurality of light-shielding rings becomes smaller closer to the sensor.

4. A pyranometer according to claim 1, wherein a second lens is provided between the light sensor and the first lens.

5. A pyranometer according to claim 4, wherein the light-shielding ring is provided between the first lens and the second lens.

6. A pyranometer according to claim 1, wherein a diffusing medium is provided between the light sensor and the first lens.

7. A pyranometer according to claim 6, wherein a plurality of lenses is provided facing a light-receiving surface of the light sensor, and the diffusing medium is provided between the light sensor and the lens closest to the light sensor.

8. A photometric device comprising:
a light sensor;
a first lens arranged to face a light-receiving surface of the light sensor; and
a light-shielding ring arranged between the light sensor and the first lens, the light-shielding ring having a light-transmissive region allowing transmission of light at some angles of incidence in the light passing through the first lens.
